(19) Europäisches Patentamt
European Patent Office
Office européen des brevets

(11) **EP 3 814 851 B1**

(12) **FASCICULE DE BREVET EUROPEEN**

(45) Date de publication et mention
de la délivrance du brevet:
**15.10.2025 Bulletin 2025/42**

(21) Numéro de dépôt: **19742871.7**

(22) Date de dépôt: **19.06.2019**

(51) Classification Internationale des Brevets (IPC):
**G04G 3/02** (2006.01)

(52) Classification Coopérative des Brevets (CPC):
**G04G 3/02;** G01V 2200/12

(86) Numéro de dépôt international:
**PCT/FR2019/051506**

(87) Numéro de publication internationale:
**WO 2020/002798 (02.01.2020 Gazette 2020/01)**

(54) **PROCEDE ET SYSTEME D'ESTIMATION DE LA DERIVE D'UNE HORLOGE DE DATATION D'ECHANTILLONS DE DONNEES SISMIQUES**

VERFAHREN UND SYSTEM ZUR SCHÄTZUNG DER DRIFT EINER DATIERUNGSTAKT VON SEISMISCHEN DATENPROBEN

METHOD AND SYSTEM FOR ESTIMATING THE DRIFT OF A DATATION CLOCK OF SEISMIC DATA SAMPLES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.06.2018 FR 1856008**

(43) Date de publication de la demande:
**05.05.2021 Bulletin 2021/18**

(73) Titulaire: **SERCEL**
**44470 Carquefou (FR)**

(72) Inventeur: **L'HER, Christophe**
**44470 Carquefou (FR)**

(74) Mandataire: **Ipsilon**
**Europarc - Bat B7**
**3, rue Edouard Nignon**
**44300 Nantes (FR)**

(56) Documents cités:
**EP-A2- 2 525 240 US-B2- 9 417 359**

**Description**

La présente invention se rapporte à un procédé et un système d'estimation de la dérive dans le temps d'un paramètre physique de fonctionnement d'une horloge de datation d'échantillons de données sismiques.

L'invention appartient au domaine de la prospection sismique, qu'elle soit marine ou terrestre, et s'applique notamment à la minimisation des erreurs de datation des échantillons de données sismiques recueillis.

Toute horloge présente au fil du temps un certain décalage dans le temps, qui s'exprime par exemple par une erreur de phase accumulée, communément appelée « dérive ». Cette dérive est due à divers facteurs, dont le vieillissement de l'horloge ou encore la température de l'environnement dans lequel elle se trouve.

Cette dérive affecte aussi bien les horloges du type comportant un oscillateur à quartz (oscillateurs compensés en température TCXO, en anglais « Temperature Controlled Crystal Oscillators », ou oscillateurs compensés à microcontrôleur MCXO, en anglais « Microcontroller Compensated Crystal Oscillators, ou encore oscillateurs à quartz thermostatés OCXO, en anglais « Oven Controlled Crystal Oscillators ») que les horloges du type atomique (au rubidium ou au césium).

Lorsque l'horloge est utilisée pour dater des événements tels que des réceptions d'échantillons de données sismiques, la dérive de l'horloge induit des erreurs dans la datation de ces échantillons.

Les méthodes actuelles de correction de la dérive de l'horloge se fondent généralement sur l'hypothèse que cette dérive est linéaire et appliquent donc des corrections elles aussi linéaires. C'est le cas par exemple dans le document de brevet US-A-9 417 359. Le document EP 2 525 240 A2, divulgue un procédé selon le préambule de la revendication 1.

Cela signifie que, si par exemple une erreur accumulée de phase de l'horloge de 30 ms a été mesurée au bout de 30 jours de fonctionnement, on considère que la dérive est de 1 ms par jour et on rectifie d'autant.

Néanmoins, cette façon de procéder n'est pas satisfaisante car on constate en pratique que la dérive de l'horloge n'est pas linéaire.

L'invention a pour but de remédier à au moins un des inconvénients précités de l'art antérieur.

Dans ce but, la présente invention propose un procédé d'estimation de la dérive dans le temps d'un paramètre physique de fonctionnement d'une horloge de datation d'échantillons de données sismiques associée à un nœud de collecte de données sismiques, notamment en mer avec un nœud adapté pour rester sur un fond marin, conforme à la revendication 1.

Il en résulte une erreur résiduelle de datation par l'horloge inférieure à l'erreur résiduelle obtenue lorsqu'on applique une correction linéaire à la dérive de l'horloge.

En outre, ce procédé peut être mis en œuvre, soit au sein même de l'équipement de collecte de données sismiques, soit dans un ordinateur séparé.

Par ailleurs, on peut estimer la dérive de l'horloge à tout moment à l'issue d'une campagne de collecte de données sismiques, voire même au cours de la campagne lorsque celle-ci a une durée particulièrement longue.

De plus, au cas où l'horloge est du type OCXO, ce procédé est robuste vis-à-vis du temps de chauffe du four de l'horloge.

Au surplus, ce procédé peut être appliqué indifféremment à tout type d'horloge, dont les horloges du type à quartz (dont TCXO, MCXO et OCXO) et les horloges du type atomique (dont celles au rubidium et celles au césium).

L'invention permet d'obtenir une estimation de bonne qualité de la dérive de l'horloge, ce qui permet d'appliquer une correction pertinente aux échantillons de données sismiques recueillis.

Des modes particuliers de réalisation sont énoncés dans les revendications dépendantes.

Toujours dans le même but que celui indiqué plus haut, la présente invention propose également un système d'estimation de la dérive dans le temps d'un paramètre physique de fonctionnement d'une horloge de datation d'échantillons de données sismiques associée à un nœud de collecte de données sismiques, conforme à la revendication 15.

Les avantages et caractéristiques particulières du système étant similaires à ceux des procédés, ils ne sont pas rappelés ici.

D'autres aspects et avantages de l'invention apparaîtront à la lecture de la description détaillée ci-après de modes particuliers de réalisation de l'invention, donnés à titre d'exemples nullement limitatifs, en référence aux dessins annexés, dans lesquels :

- la figure 1 est un organigramme illustrant de façon générale des étapes d'un procédé d'estimation de la dérive dans le temps d'un paramètre physique de fonctionnement d'une horloge de datation d'échantillons de données sismiques ;
- la figure 2 est un organigramme illustrant des étapes du procédé de la figure 1 dans un premier mode particulier de réalisation où le paramètre physique de fonctionnement est la fréquence instantanée de l'horloge ;
- la figure 3 est un organigramme illustrant des étapes du procédé de la figure 1 dans un exemple particulier de réalisation ne faisant pas partie de l'invention, où le paramètre physique de fonctionnement est la phase de l'horloge ;
- la figure 4 est un organigramme illustrant des étapes du procédé de la figure 1 dans un exemple particulier de réalisation ne faisant pas partie de l'invention, incluant une mission simulée ; et

- la figure 5 est un graphique représentant l'erreur accumulée de phase en fonction du temps, dans le cas d'une correction d'ordre 2 et dans le cas d'une correction d'ordre 3.

Dans toute la suite, on considère un nœud de collecte de données sismiques. Ces données sont collectées au moyen de divers capteurs sismiques, dont des capteurs de vélocité, des accéléromètres ou encore des hydrophones et/ou des géophones. A un nœud donné peuvent par exemple être associés trois géophones, ou un hydrophone et trois géophones, ou un hydrophone et trois accéléromètres, toute autre combinaison de capteurs étant envisageable. En particulier, bien que la collecte des données puisse être réalisée à terre ou dans un puits, dans un mode particulier de réalisation, on s'intéressera à une collecte de données sismiques en mer, par un nœud qui est notamment apte à être posé au fond de l'eau pour une campagne sismique avant récupération.

Une horloge est associée à ce nœud afin de dater les échantillons de données sismiques reçus par le nœud.

Sachant que, par exemple lors d'une campagne de collecte de données sismiques en mer, le nœud peut rester au fond de la mer pendant plusieurs mois, l'horodatage des échantillons de données sismiques est assuré par une horloge haut de gamme, présentant une stabilité élevée.

Cette horloge peut être du type à oscillateur à quartz (par exemple TCXO, MCXO ou OCXO) ou du type atomique (par exemple au rubidium ou au césium). Elle est définie par un paramètre physique de fonctionnement, qui peut être par exemple sa phase par rapport à une horloge de référence, ou encore sa fréquence instantanée.

Comme expliqué en introduction, au fil du temps et après une synchronisation initiale, l'horloge subit une dérive qui se traduit au bout d'une durée prédéterminée par une erreur accumulée de phase ou une erreur accumulée de fréquence instantanée.

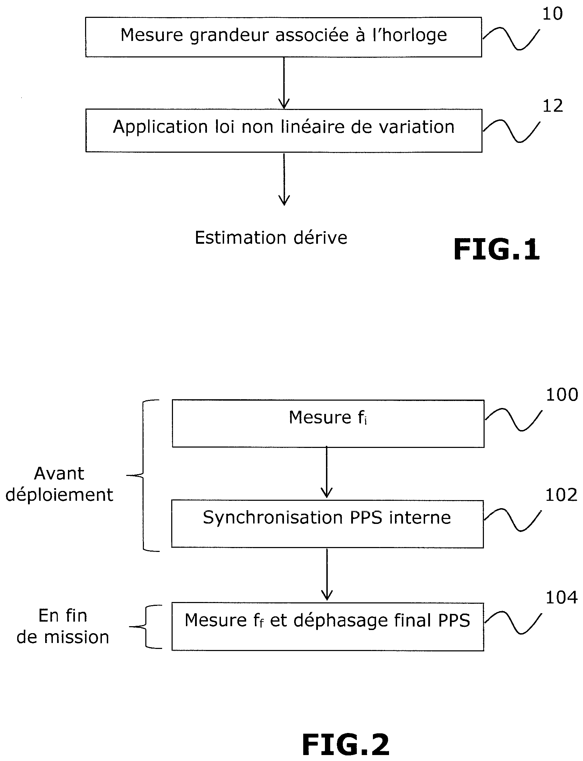

La figure 1 illustre le procédé d'estimation de cette dérive conforme à l'invention dans sa généralité.

Il comporte une étape 10 de mesure d'une grandeur physique associée à l'horloge. On mesure cette grandeur physique, soit à des instants prédéterminés, soit pendant des périodes de temps prédéterminées.

Cette étape 10 de mesure est suivie d'une étape 12 au cours de laquelle on applique à cette grandeur physique une loi prédéterminée non linéaire de variation et notamment une loi polynomiale d'ordre supérieur ou égal à 2. On obtient alors une estimation de l'erreur accumulée de phase de l'horloge, cette erreur étant représentative de la dérive de l'horloge.

On détaille ci-après deux modes particuliers de réalisation de ce procédé d'estimation, selon que la grandeur physique choisie est la fréquence instantanée et/ou la phase de l'horloge.

Dans un premier mode de réalisation où on utilise comme grandeurs physiques à mesurer la fréquence instantanée et la phase de l'horloge, le détail de l'étape de mesure 10 est illustré par la figure 2.

Cette étape de mesure est réalisée en deux phases : lors d'une première phase, qui se déroule avant déploiement du nœud pour une mission de collecte de données sismiques, on mesure lors d'une étape 100 la fréquence instantanée initiale $f_i$ de l'horloge et on synchronise, lors d'une étape 102, un signal interne d'information temporelle du nœud par rapport à un signal d'information temporelle de référence.

Le signal interne d'information temporelle du nœud est produit par l'horloge. Elle fonctionne généralement à une fréquence de plusieurs MHz, par exemple 10 MHz et, par l'intermédiaire d'un diviseur de fréquence d'horloge, l'horloge fournit également un signal à une autre fréquence, de 1 Hz par exemple, qui est utilisé comme signal interne d'information temporelle ou PPS (impulsion par seconde, en anglais « Pulse Per Second ») interne.

Ce PPS interne permet à un microcontrôleur d'horodater les échantillons de données sismiques reçus par les capteurs sismiques et avec l'aide d'un convertisseur analogique-numérique. Les données sismiques reçues sont mémorisées dans une mémoire, qui peut par exemple être du type « flash ».

Lors de l'étape 102, on cale ce PPS interne sur un signal de référence ou PPS externe, qui peut par exemple être fourni par un système global de positionnement ou GPS (en anglais « Global Positioning System »), sachant que lorsque le nœud est sur un navire de prospection sismique, il est généralement connecté à un récepteur GPS.

Cette opération de synchronisation ou calage peut être réalisée via l'envoi d'un signal de réinitialisation par le microcontrôleur à l'horloge.

Après synchronisation, il n'y a plus de différence de phase entre les PPS interne et externe.

A l'issue de cette première phase, le nœud est déployé et la mission de collecte de données sismiques se déroule pendant un certain nombre de jours, de semaines, voire de mois, l'horloge fonctionnant en permanence pendant la mission.

Dans l'exemple d'une collecte de données sismiques en mer, comme le signal GPS est électromagnétique, il ne traverse pas la colonne d'eau. Il reste donc inaccessible pour l'horloge. Le signal GPS peut également être inaccessible lors d'une collecte de données sismiques à terre.

Au fil du temps, l'erreur de fréquence instantanée de l'horloge induit une erreur accumulée de phase entre le PPS interne et le PPS externe. En effet, l'électronique horodate les données sismiques au moyen d'un signal censé avoir une fréquence constante de 1 Hz dans l'exemple décrit ici, mais en pratique, ce n'est pas le cas, car l'instabilité en température et le vieillissement des oscillateurs à quartz (TCXO, MCXO ou OCXO) ainsi que des oscillateurs atomiques (rubidium ou césium) ne sont pas négligeables.

L'erreur de phase accumulée peut être mesurée lorsque le PPS externe est disponible, c'est-à-dire, dans l'exemple d'une mission en mer, lorsque le nœud est rapatrié à bord du navire de prospection sismique et reconnecté au récepteur GPS.

Ainsi, lors d'une seconde phase, qui se déroule à la fin de la mission de collecte de données sismiques, lors d'une étape 104, on mesure la fréquence instantanée finale $f_f$ de l'horloge, ainsi que le déphasage final entre le PPS interne et le PPS externe.

En variante, cette seconde phase peut se dérouler à un instant prédéterminé au cours de la mission, auquel cas on mesure la fréquence instantanée de l'horloge à cet instant ainsi que le déphasage à cet instant entre le PPS interne et le PPS externe.

Lors de l'étape 12 d'application de la loi prédéterminée non linéaire de variation de la fréquence instantanée de l'horloge, on estime l'erreur finale de fréquence instantanée de l'horloge à partir des fréquences instantanées initiale $f_i$ et finale $f_f$ et du déphasage final.

Pour ce faire, conformément à l'invention, on formule l'hypothèse que la fréquence instantanée de l'horloge varie suivant une équation polynomiale d'ordre 2, d'où il s'ensuit que la phase de l'horloge varie suivant une équation polynomiale d'ordre 3 ; on pourrait prendre un ordre supérieur du polynôme.

Soit $\varepsilon(t)$ l'erreur de fréquence instantanée de l'horloge en fonction du temps t. L'équation polynomiale d'ordre 2 s'écrit :

$$\varepsilon(t) = \varepsilon_i + \alpha.t + \beta.t^2$$

où $\varepsilon_i = \varepsilon(0)$ désigne l'erreur de fréquence initiale et $\alpha$ et $\beta$ désignent des coefficients prédéterminés.

L'erreur de phase accumulée est donnée par :

$$\varphi(t) = \int \varepsilon(t)dt$$

L'erreur de phase accumulée est donc donnée par l'équation polynomiale d'ordre 3 suivante :

$$\varphi(t) = \varepsilon_i.t + \alpha.\frac{t^2}{2} + \beta.\frac{t^3}{3}$$

Soit T l'instant de fin de la mission. L'erreur finale de fréquence instantanée et l'erreur finale de phase mesurées à l'instant T sont notées :

$$\varepsilon(T) = \varepsilon_f$$

$$\varphi(T) = \varphi_f$$

On peut alors calculer les coefficients $\alpha$ et $\beta$, étant donné qu'on dispose de deux équations à deux inconnues :

$$\beta = \frac{\varphi_f - \frac{T}{2}(\varepsilon_f + \varepsilon_i)}{\left(\frac{1}{3} - \frac{1}{2}\right).T^3}$$

$$\alpha = \frac{\varepsilon_f - \varepsilon_i - \beta.T^2}{T}$$

Ces coefficients peuvent être calculés soit dans le nœud, soit en post-traitement, dans un calculateur séparé.

Ce mode de réalisation, pour lequel la dérive temporelle de l'horloge est décrite suivant une équation d'ordre 3, n'est possible que si le nœud dispose d'un moyen pour mesurer précisément la fréquence instantanée de son horloge.

Estimer la dérive temporelle de l'horloge suivant une équation cubique permet de réduire l'erreur maximum de datation des échantillons sismiques par rapport à une équation d'ordre 2 ou parabolique.

En effet, utiliser une équation d'ordre 2 s'appuie sur l'hypothèse que la fréquence évolue dans le temps de manière linéaire. Or le phénomène de vieillissement des horloges fait varier la fréquence selon une loi non linéaire.

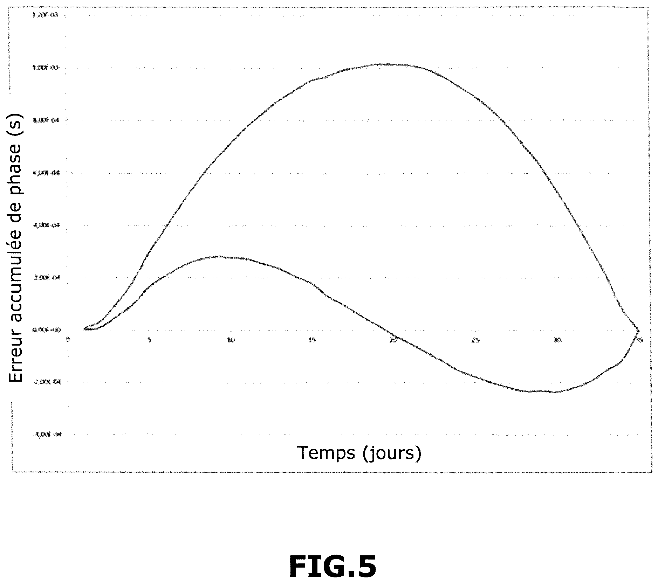

Ainsi, comme le montre la figure 5, qui représente l'erreur accumulée de phase (en secondes) en fonction du temps (en jours), l'erreur résiduelle de datation des échantillons sismiques a une forme de cloche lorsque la correction appliquée est d'ordre 2, avec le maximum d'erreur au milieu de la mission (courbe du haut sur la figure 5).

Ce phénomène est supprimé lorsqu'on utilise une équation cubique (courbe du bas sur la figure 5), ce qui minimise l'erreur maximum de datation.

En variante, au lieu d'une loi de variation de la fréquence fondée sur une équation polynomiale, on pourrait utiliser d'autres formes d'évolution, telles qu'une évolution logarithmique par exemple.

Avant déploiement du nœud, on peut réduire l'erreur de fréquence instantanée de l'horloge en effectuant une étape préliminaire de réglage de la fréquence de sortie de l'horloge de façon à réduire l'erreur de fréquence instantanée de l'horloge.

Cette étape peut être réalisée soit au moment de la fabrication de l'horloge, soit lors d'une maintenance de l'horloge. Les horloges du commerce disposent en effet d'une entrée permettant ce réglage. Cela permet de minimiser encore davantage l'erreur résiduelle de datation par l'horloge.

Pour prendre en compte les changements de température qui peuvent se produire notamment au début ou à la fin de la mission, en raison du déploiement ou du rapatriement du nœud et de l'électronique associée dans une eau froide par exemple dans le cas d'une mission en mer, on peut améliorer l'estimation de la dérive de l'horloge en introduisant un paramètre de température. En effet, la prise en compte de la température dans l'estimation de la dérive de l'horloge permet d'améliorer la précision de cette estimation.

A cet effet, avant déploiement du nœud pour une mission de collecte de données sismiques, on mesure l'évolution de la fréquence instantanée de l'horloge en fonction de la température de l'horloge. Puis pendant la mission, on mesure la température de l'horloge.

On introduit alors dans la loi de variation non linéaire de la fréquence instantanée de l'horloge un paramètre $\varepsilon_{Temp}$ représentatif de l'erreur de fréquence instantanée d'horloge due au changement de température. L'équation polynomiale d'ordre 3 donnant l'erreur de phase accumulée de l'horloge devient alors :

$$\varphi(t) = \left(\varepsilon_i + \varepsilon_{Temp}\right).t + \alpha.\frac{t^2}{2} + \beta.\frac{t^3}{3}$$

avec

$$\beta = \frac{\varphi_f - \dfrac{T}{2}\left(\varepsilon_f + \varepsilon_i\right)}{\left(\dfrac{1}{3} - \dfrac{1}{2}\right).T^3}$$

$$\alpha = \frac{\varepsilon_f - \varepsilon_i - \beta.T^2 - 2.\varepsilon_{Temp}}{T}$$

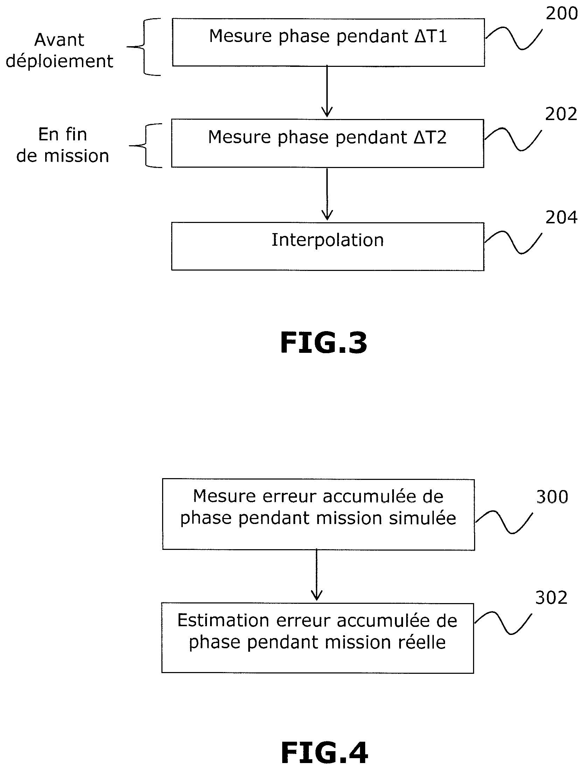

La figure 3 illustre le déroulement du procédé conforme à l'invention dans un exemple de réalisation ne faisant pas partie de l'invention, où le paramètre physique de fonctionnement de l'horloge utilisé n'est pas la fréquence instantanée, mais la phase de l'horloge.

Dans ce mode de réalisation, l'étape 10 de mesure se déroule en deux temps.

Tout d'abord, avant déploiement du nœud pour une mission de collecte de données sismiques, on mesure lors d'une étape 200 la phase de l'horloge de façon continue pendant une période de temps prédéterminée ΔT1 de façon à connaître l'évolution de l'erreur accumulée de phase pendant cette période ΔT1.

Puis à la fin de la mission, on mesure à nouveau, lors d'une étape 202, la phase de l'horloge, de façon continue pendant une période de temps prédéterminée ΔT2, de façon à connaître l'évolution de l'erreur accumulée de phase pendant cette période ΔT2.

Ensuite, lors d'une étape 204, on estime l'erreur accumulée de phase pendant la mission, c'est-à-dire entre les deux périodes ΔT1 et ΔT2, en utilisant une méthode d'interpolation telle que par exemple la méthode des splines, une spline étant une fonction définie par morceaux par des polynômes. Cette méthode d'interpolation est connue en soi. Cet exemple n'est pas limitatif : on pourrait utiliser une autre méthode d'interpolation.

Ce mode de réalisation est avantageux en ce qu'il ne requiert pas de mesurer la fréquence instantanée de l'horloge. Il peut donc être mis en œuvre par une électronique encore plus simple que dans le premier mode de réalisation.

Dans un autre exemple de réalisation ne faisant pas partie de l'invention, illustré par la figure 4, en amont de la mission, on mesure lors d'une étape 300 l'erreur accumulée de phase au cours d'une mission simulée de collecte de données sismiques, en production ou en maintenance, à différentes températures. Cela constitue une forme de calibration. La loi décrite plus haut est ensuite appliquée pour estimer l'erreur accumulée de phase pendant une mission réelle, lors d'une étape 302.

Le système d'estimation de la dérive dans le temps de l'horloge conforme à l'invention peut comporter un module électronique ou informatique, soit embarqué dans le nœud, soit déporté dans un calculateur ou ordinateur ou circuit électronique séparé, capable de mesurer l'erreur de fréquence et/ou de phase de l'horloge au début et à la fin de la mission, ce qui permet d'estimer l'erreur de phase accumulée suivant un polynôme d'ordre 3, tandis que les équipements classiques sont seulement capables de mesurer la dérive de phase et donc d'estimer l'erreur de phase accumulée suivant un polynôme d'ordre 1.

Plus particulièrement, le module précité est configuré pour réaliser les étapes décrites plus haut en lien avec les figures 1 à 4. Lorsque le module est embarqué dans le nœud, il peut consister en une unité distincte des unités fonctionnelles déjà présentes dans le nœud, telles que le microcontrôleur du nœud, ou bien il peut être intégré fonctionnellement à de telles unités. A titre d'exemple, le microcontrôleur du nœud est configuré pour réaliser en outre au moins certaines des étapes décrites plus haut en lien avec les figures 1 à 4.

## Revendications

1. Procédé d'estimation de la dérive dans le temps d'un paramètre physique de fonctionnement d'une horloge de datation d'échantillons de données sismiques associée à un nœud de collecte de données sismiques, dans lequel :

   on mesure (10) au moins une grandeur associée à ladite horloge, à des instants prédéterminés ou pendant des périodes de temps prédéterminées ; et
   on applique (12) à ladite grandeur une loi prédéterminée non linéaire de variation de ladite grandeur qui dépend des valeurs recueillies lors de ladite étape (10) de mesure, de façon à obtenir une estimation de la dérive dans le temps dudit paramètre physique,
   ledit procédé étant **caractérisé en ce que** lors de ladite étape (10) de mesure :

   avant déploiement dudit nœud pour une mission de collecte de données sismiques, on mesure (100) la fréquence instantanée initiale de ladite horloge et on synchronise (102) un signal interne d'information temporelle dudit nœud par rapport à un signal d'information temporelle de référence ;
   à un instant prédéterminé au cours de ladite mission, on mesure (104) la fréquence instantanée finale de ladite horloge et le déphasage entre ledit signal interne d'information temporelle dudit nœud et ledit signal d'information temporelle de référence ;
   et lors de ladite étape (12) d'application de ladite loi, on estime l'erreur de fréquence instantanée de ladite horloge à partir desdites fréquences instantanées initiale et audit instant prédéterminé et dudit déphasage,
   et **en ce que** suivant ladite loi prédéterminée, ladite fréquence instantanée varie suivant une équation polynomiale d'ordre supérieur ou égal à 2, de sorte que la phase de ladite horloge varie suivant une équation polynomiale d'ordre supérieur ou égal à 3.

2. Procédé selon la revendication 1, **caractérisé en ce que** lors d'une étape préliminaire, on règle la fréquence de sortie de ladite horloge de façon à réduire l'erreur de fréquence instantanée de ladite horloge.

3. Procédé selon la revendication 2, **caractérisé en ce qu'**on effectue ladite étape préliminaire pendant une phase de fabrication de ladite horloge.

4. Procédé selon la revendication 2, **caractérisé en ce qu'**on effectue ladite étape préliminaire pendant une phase de maintenance de ladite horloge.

5. Procédé selon l'une quelconque des revendications précédentes, **caractérisé en ce que** ledit signal d'information temporelle de référence est fourni par un système de localisation GPS.

6. Procédé selon l'une quelconque des revendications précédentes, **caractérisé en ce que** :

avant déploiement dudit nœud pour une mission de collecte de données sismiques, on mesure en outre l'évolution de ladite grandeur en fonction de la température de ladite horloge ;
pendant ladite mission, on mesure la température de ladite horloge ; et
ladite loi prédéterminée prend en compte ladite température.

7. Procédé selon l'une quelconque des revendications précédentes, **caractérisé en ce que** ledit instant prédéterminé au cours de la mission correspond à la fin de la mission.

8. Procédé selon l'une quelconque des revendications précédentes, **caractérisé en ce que** suivant ladite loi prédéterminée, ladite fréquence instantanée varie suivant une équation polynomiale d'ordre 2, de sorte que la phase de ladite horloge varie suivant une équation polynomiale d'ordre 3.

9. Procédé selon l'une quelconque des revendications précédentes, **caractérisé en ce que** ledit nœud est adapté à une utilisation sur fond marin.

10. Système d'estimation de la dérive dans le temps d'un paramètre physique de fonctionnement d'une horloge de datation d'échantillons de données sismiques associée à un nœud de collecte de données sismiques, **caractérisé en ce qu'**il comporte un module adapté à mettre en œuvre des étapes d'un procédé selon l'une quelconque des revendications précédentes.

## Patentansprüche

1. Verfahren zur Schätzung der Abweichung, im Laufe der Zeit, eines physikalischen Betriebsparameters einer Uhr zur Datierung von Abtastwerten seismischer Daten, die mit einem Knoten zur Sammlung seismischer Daten assoziiert ist, wobei:

mindestens eine mit der Uhr assoziierte Größe zu vorbestimmten Zeitpunkten oder während vorbestimmter Zeiträume gemessen wird (10); und
auf die Größe ein vorbestimmtes nichtlineares Gesetz über die Änderung der Größe angewendet wird (12), das von den während des Messschritts (10) aufgenommenen Werten abhängt, um so eine Schätzung der Abweichung, im Laufe der Zeit, des physikalischen Parameters zu erhalten,
wobei das Verfahren **dadurch gekennzeichnet ist, dass** während des Messschritts (10):

vor dem Einsatz des Knotens für eine Mission zur Sammlung seismischer Daten die anfängliche momentane Frequenz der Uhr gemessen wird (100) und ein internes Zeitinformationssignal des Knotens in Bezug auf ein Referenzzeitinformationssignal synchronisiert wird (102);
zu einem vorbestimmten Zeitpunkt während der Mission die abschließende momentane Frequenz der Uhr und die Phasenverschiebung zwischen dem internen Zeitinformationssignal des Knotens und dem Referenzzeitinformationssignal gemessen wird (104);
und bei dem Schritt (12) des Anwendens des Gesetzes der Fehler der momentanen Frequenz der Uhr anhand der anfänglichen momentanen Frequenz und der momentanen Frequenz zu dem vorbestimmten Zeitpunkt und der Phasenverschiebung geschätzt wird,
und dass gemäß dem vorbestimmten Gesetz die momentane Frequenz gemäß einer Polynomgleichung mit einem Grad größer als oder gleich 2 variiert, sodass die Phase der Uhr gemäß einer Polynomgleichung mit einem Grad größer als oder gleich 3 variiert.

2. Verfahren nach Anspruch 1, **dadurch gekennzeichnet, dass** bei einem Vorabschritt die Ausgangsfrequenz der Uhr eingestellt wird, um den Fehler der momentanen Frequenz der Uhr zu reduzieren.

3. Verfahren nach Anspruch 2, **dadurch gekennzeichnet, dass** der Vorabschritt während einer Fertigungsphase der Uhr durchgeführt wird.

4. Verfahren nach Anspruch 2, **dadurch gekennzeichnet, dass** der Vorabschritt während einer Wartungsphase der Uhr durchgeführt wird.

5. Verfahren nach einem der vorhergehenden Ansprüche, **dadurch gekennzeichnet, dass** das Referenzzeitinformationssignal durch ein GPS-Ortungssystem bereitgestellt wird.

6. Verfahren nach einem der vorhergehenden Ansprüche, **dadurch gekennzeichnet, dass**:

   vor dem Einsatz des Knotens für eine Mission zur Sammlung seismischer Daten ferner die Entwicklung der Größe in Abhängigkeit von der Temperatur der Uhr gemessen wird;
   während der Mission die Temperatur der Uhr gemessen wird; und
   das vorbestimmte Gesetz die Temperatur berücksichtigt.

7. Verfahren nach einem der vorhergehenden Ansprüche, **dadurch gekennzeichnet, dass** der vorbestimmte Zeitpunkt während der Mission dem Ende der Mission entspricht.

8. Verfahren nach einem der vorhergehenden Ansprüche, **dadurch gekennzeichnet, dass** gemäß dem vorbestimmten Gesetz die momentane Frequenz gemäß einer Polynomgleichung 2. Grades variiert, sodass die Phase der Uhr gemäß einer Polynomgleichung 3. Grades variiert.

9. Verfahren nach einem der vorhergehenden Ansprüche, **dadurch gekennzeichnet, dass** der Knoten zur Verwendung am Meeresboden angepasst ist.

10. System zur Schätzung der Abweichung, im Laufe der Zeit, eines physikalischen Betriebsparameters einer Uhr zur Datierung von Abtastwerten seismischer Daten, die mit einem Knoten zur Sammlung seismischer Daten assoziiert ist, **dadurch gekennzeichnet, dass** es ein Modul umfasst, das zur Umsetzung der Schritte eines Verfahrens nach einem der vorhergehenden Ansprüche angepasst ist.

## Claims

1. Method for estimating the drift over time of a physical operating parameter of a clock for dating samples of seismic data, associated with a seismic data collection node, wherein:

   at least one variable associated with said clock is measured (10) at predetermined instants in time or for predetermined periods of time; and
   a predetermined non-linear law of variation of said variable, which depends on the values collected in said measurement step (10), is applied (12) to said variable so as to obtain an estimate of the drift over time of said physical parameter,
   said method being **characterized in that**, in said measurement step (10):

   before deploying said node for a seismic data collection mission, the initial instantaneous frequency of said clock is measured (100) and an internal time information signal of said node is synchronized (102) with respect to a reference time information signal;
   at a predetermined instant in time during said mission, the final instantaneous frequency of said clock and the phase offset between said internal time information signal of said node and said reference time information signal are measured (104);
   and, in said step (12) of applying said law, the instantaneous frequency error of said clock is estimated based on said initial instantaneous frequencies and at said predetermined instant in time and said phase offset, and **in that**, according to said predetermined law, said instantaneous frequency varies according to a polynomial equation of order greater than or equal to 2, such that the phase of said clock varies according to a polynomial equation of order greater than or equal to 3.

2. Method according to Claim 1, **characterized in that**, in a preliminary step, the output frequency of said clock is adjusted so as to reduce the instantaneous frequency error of said clock.

3. Method according to Claim 2, **characterized in that** said preliminary step is performed during a phase of manufacturing said clock.

4.  Method according to Claim 2, **characterized in that** said preliminary step is performed during a phase of maintaining said clock.

5.  Method according to any one of the preceding claims, **characterized in that** said reference time information signal is provided by a GPS location system.

6.  Method according to any one of the preceding claims, **characterized in that**:

    before deploying said node for a seismic data collection mission, the evolution of said variable is furthermore measured as a function of the temperature of said clock;
    during said mission, the temperature of said clock is measured; and
    said predetermined law takes into account said temperature.

7.  Method according to any one of the preceding claims, **characterized in that** said predetermined instant in time during the mission corresponds to the end of the mission.

8.  Method according to any one of the preceding claims, **characterized in that**, according to said predetermined law, said instantaneous frequency varies according to a 2nd-order polynomial equation, such that the phase of said clock varies according to a 3rd-order polynomial equation.

9.  Method according to any one of the preceding claims, **characterized in that** said node is designed for use on a seabed.

10. System for estimating the drift over time of a physical operating parameter of a clock for dating samples of seismic data, associated with a seismic data collection node, **characterized in that** it comprises a module designed to implement steps of a method according to any one of the preceding claims.

Mesure grandeur associée à l'horloge ⟩ 10

Application loi non linéaire de variation ⟩ 12

Estimation dérive

**FIG.1**

Avant déploiement

Mesure $f_i$ ⟩ 100

Synchronisation PPS interne ⟩ 102

En fin de mission

Mesure $f_f$ et déphasage final PPS ⟩ 104

**FIG.2**

Avant
déploiement

```
┌──────────────────────────────────┐
│   Mesure phase pendant ΔT1       │ ⌇ 200
└──────────────────────────────────┘
                │
                ▼
```

En fin
de mission

```
┌──────────────────────────────────┐
│   Mesure phase pendant ΔT2       │ ⌇ 202
└──────────────────────────────────┘
                │
                ▼
┌──────────────────────────────────┐
│          Interpolation           │ ⌇ 204
└──────────────────────────────────┘
```

# FIG.3

```
┌──────────────────────────────────┐
│   Mesure erreur accumulée de     │ ⌇ 300
│  phase pendant mission simulée   │
└──────────────────────────────────┘
                │
                ▼
┌──────────────────────────────────┐
│  Estimation erreur accumulée de  │ ⌇ 302
│   phase pendant mission réelle   │
└──────────────────────────────────┘
```

# FIG.4

**FIG.5**

## RÉFÉRENCES CITÉES DANS LA DESCRIPTION

**Documents brevets cités dans la description**

- US 9417359 A
- EP 2525240 A2